# EUROPÄISCHE PATENTSCHRIFT

(11) **EP 4 268 336 B1**
(45) Veröffentlichungstag und Bekanntmachung des Hinweises auf die Patenterteilung: **02.07.2025**
(21) Anmeldenummer: 22706259.3
(22) Anmeldetag: 01.02.2022
(51) Int. Cl.: H02G 3/06, H02G 1/14

(54) **KONTAKTIERUNGSSYSTEM**
CONTACT-MAKING SYSTEM
SYSTÈME DE MISE EN CONTACT

(30) Priorität: 04.02.2021 DE 102021102569
(43) Veröffentlichungstag der Anmeldung: 01.11.2023
(60) Teilanmeldung: 25160605.9
(73) Patentinhaber: PFLITSCH GMBH & CO. KG, 42499 Hückeswagen (DE)
(72) Erfinder: LECHNER, Martin, 51789 Lindlar (DE)
(74) Vertreter: Geskes, Christoph
(86) Internationale Anmeldenummer: PCT/EP2022/052281
(87) Internationale Veröffentlichungsnummer: WO 2022/167397

(56) Entgegenhaltungen:
- EP-A1- 0 901 209
- EP-A1- 3 598 594
- EP-B1- 1 922 793
- EP-B1- 3 022 806
- CH-A5- 690 809
- DE-B4- 102008 011 978
- DE-C1- 19 523 795
- US-A1- 2008 268 687

## Beschreibung

Die Erfindung betrifft ein Kontaktierungssystem, eine Verwendung eines Kontaktierungssystems, ein Verschraubungssystem und ein Verfahren zur Ableitung von elektrischen Strömen eines Schirms eines Langformteils.

Kontaktierungssysteme zur Ableitung von elektrischen Strömen von Langformteilen sind aus dem Stand der Technik allgemein bekannt. So offenbart DE 10 2008 011 978 B4 eine Verschraubung für abgedichtete Leitungsdurchführungen. Diese weist einen Doppelnippel auf, der auf der einen Seite eine Dichtung umfasst und auf der gegenüberliegenden Seite in einen Adapter einschraubbar ist. In den Adapter kann eine EMV-Dichtung eingesetzt werden, die einen Schirm eines Langformteils kontaktieren kann.

EP 3 598 594 A1 offenbart eine Kabelverschraubung mit einer Zugentlastung, die mit einem Kabel verklemmt wird, wenn ein Montagestutzen in einen Zwischenstutzen geschraubt wird.

US 2008/268687 A1 offenbart einen Kabelverbinder, der ein Verbindergehäuse umfasst, das einseitig ein Außengewinde aufweist, mit dem das Verbindergehäuse mit einer Anschlussgeometrie verbindbar ist.

EP 0 901 209 A1 offenbart eine Kabelverschraubung zur Herstellung eines elektrischen Kontaktes einer abisolierten Zone eines Kabels.

EP 1 922 793 B1 offenbart einen Bausatz für zumindest zwei unterschiedliche Kabelverschraubungen mit Klemmelementen zur Erfassung unterschiedlicher Kabeldurchmesser.

Nachteilig an den aus dem Stand der Technik bekannten Lösungen ist, dass die Reihenfolge der Verschraubung der Einzelteile zwingend vorgegeben ist. Beispielsweis muss bei der Leitungsdurchführung der DE 10 2008 011 978 B4 zuerst die Hülse an der Anschlussgeometrie angebracht, dann diese mit der EMV-Dichtung verschraubt und erst danach die Dichtung und Zugentlastung angezogen werden.

Weiterhin nachteilig aus dem Stand der Technik ist bekannt, dass der abisolierte Schirm im Kontaktierungsbereich enden muss. So offenbart DE 37 37 345 A1 eine Verschraubung für abgeschirmte Kabel, bei der ein Schirm auf eine vorgegebene Länge gekürzt ist, damit dieser zwischen einem Quetschkörper und einem Ringteil geklemmt werden kann. Dies führt zu kleinen Toleranzen bei der Montage des Langformteils, was diese zusätzlich erschwert.

Die aus dem Stand der Technik bekannten Systeme sind weiterhin derart ausgestaltet, dass ein abisolierter Schirm eine durch die EMV-Dichtung vorgegebene Länge aufweisen muss, damit dieser sicher kontaktiert werden kann. So muss in der Regel die Langformteilverschraubung festgeschraubt werden, nachdem die EMV-Dichtung aktiviert wird.

Alternativ erfolgt das Festschrauben der Langformteilverschraubung und das Aktivieren der EMV-Dichtung mit dem gleichen Montageschritt.

Aufgabe der Erfindung ist es daher, ein verbessertes Kontaktierungssystem und/oder Verschraubungssystem zur Verfügung zu stellen. Insbesondere ist die Aufgabe der Erfindung ein Kontaktierungssystem und/oder ein Verschraubungssystem zur Verfügung zu stellen, das die Montage eines Langformteils erleichtert. Insbesondere ist die Aufgabe der Erfindung ein Kontaktierungssystem und/oder ein Verschraubungssystem zur Verfügung zu stellen, das eine nachträgliche Aktivierung und/oder Deaktivierung einer EMV-Dichtung ermöglicht. Weiterhin ist die Aufgabe der Erfindung, eine verbesserte Verwendung eines Kontaktierungssystem zur Verfügung zu stellen. Weiterhin ist die Aufgabe der Erfindung ein verbessertes Verfahren zur Ableitung von elektrischen Strömen eines Schirms eines Langformteils zur Verfügung zu stellen.

Die Aufgabe wir erfindungsgemäß gelöst mittels eines Kontaktierungssystem insbesondere für elektromagnetisch verträgliche Hochstromanwendungen umfassend eine als Doppelnippel ausgestaltete Verschraubungshülse, wobei die Verschraubungshülse auf einer ersten Seite einen Anschlussabschnitt aufweist, ein Betätigungselement und ein Klemmelement, wobei das Klemmelement zumindest eine Innenmantelfläche und zumindest eine erste Stirnfläche umfasst, wobei der Anschlussabschnitt ein Anschlussgewinde und ein Betätigungsgewinde aufweist, wobei die Verschraubungshülse auf der ersten Seite der Verschraubungshülse das Anschlussgewinde zur Verbindung mit einer Anschlussgeometrie umfasst, wobei das Anschlussgewinde radial außenseitig und das Betätigungsgewinde zur Aufnahme des Betätigungselements radial innenseitig an der Verschraubungshülse angeordnet ist, und wobei das Betätigungselement eine Gegendruckstirnfläche umfasst, wobei ein Innenradius des Klemmelements zumindest abschnittsweise mittels einer radialen Kraft verringerbar ist, wobei das Betätigungselement mit dem Betätigungsgewinde auf der ersten Seite der Verschraubungshülse verschraubbar ist und wobei mittels Verschrauben des Betätigungselements mit der Verschraubungshülse die radiale Kraft auf zumindest die erste Stirnfläche des Klemmelementes aufbringbar ist, indem zumindest die Gegendruckstirnfläche des Betätigungselements mit einer ersten Stirnfläche des Klemmelementes kontaktierbar ist.

Weiterhin wird die Aufgabe erfindungsgemäß gelöst mittels einer Verwendung eines Kontaktierungssystems zum Kontaktieren eines freiliegenden Schirms eines Langformteils.

Weiterhin wird die Aufgabe erfindungsgemäß gelöst mittels eines Verschraubungssystems umfassend ein oben genanntes Kontaktierungssystem.

Weiterhin wird die Aufgabe erfindungsgemäß gelöst mittels eines Verfahrens zur Ableitung von elektrischen Strömen eines Schirms eines Langformteils umfassend die Schritte
a. Bereitstellen eines oben genannten Kontaktierungssystems,
b. teilweises Freilegen eines Schirms eines Langformteils und Einbringen dieses in das Kontaktierungssystem,
c. Verschrauben eines Betätigungselements des Kontaktierungssystems einer Verschraubungshülse, wobei das Betätigungselement auf ein Klemmelement wirkt, derart, dass das Klemmelement eine radiale Kraft auf den Schirm des Langformteils ausübt, wobei mittels Verschrauben des Betätigungselements das Klemmelement mit dem Schirm oder mit einem mit dem Schirm verbundenen Element, beispielsweise eine Quetschhülse, elektrisch kontaktiert wird.

Es wird ein Kontaktierungssystem insbesondere für elektromagnetisch verträgliche Hochstromanwendungen vorgeschlagen. Dieses umfasst eine Verschraubungshülse, wobei die Verschraubungshülse auf einer ersten Seite einen Anschlussabschnitt aufweist, ein Betätigungselement und ein Klemmelement. Das Klemmelement umfasst zumindest eine Innenmantelfläche und zumindest eine erste Stirnfläche, wobei der Anschlussabschnitt ein Anschlussgewinde und ein Betätigungsgewinde aufweist. Bevorzugt ist das Klemmelement zur elektrischen Kontaktierung eines Schirmes eines durch das Kontaktierungssystem geführten Kabels vorgesehen. Die Verschraubungshülse umfasst auf der ersten Seite der Verschraubungshülse das Anschlussgewinde zur Verbindung mit einer Anschlussgeometrie, wobei das Anschlussgewinde im Wesentlichen radial weiter außen als das Betätigungsgewinde zur Aufnahme des Betätigungselements angeordnet ist. Das Betätigungselement umfasst eine Gegendruckstirnfläche. Ein Innenradius des Klemmelements ist zumindest abschnittsweise mittels einer radialen Kraft verringerbar. Das Betätigungselement ist mit dem Betätigungsgewinde auf der ersten Seite der Verschraubungshülse verschraubbar, wobei mittels Verschrauben des Betätigungselements mit der Verschraubungshülse die radiale Kraft auf zumindest die erste Stirnfläche des Klemmelementes aufbringbar ist, indem zumindest die Gegendruckstirnfläche des Betätigungselements mit einer ersten Stirnfläche des Klemmelementes kontaktierbar ist.

Das Kontaktierungssystem umfasst eine Verschraubungshülse. Diese ist insbesondere ein Hohlzylindrischer Körper. Erfindungsgemäß umfasst die Verschraubungshülse einen Anschlussabschnitt. Der Anschlussabschnitt erstreckt ist insbesondere im Wesentlichen über eine vollständige Länge der Verschraubungshülse. In einer weiteren Ausgestaltung erstreckt sich der Anschlussabschnitt über einen Abschnitt der Verschraubungshülse, insbesondere über nur einen Teil der Länge der Verschraubungshülse. Der Anschlussabschnitt erstreckt sich bevorzugt bis zu einem Schraubring. In einer weiteren Ausgestaltung umfasst der Anschlussabschnitt ein Anschlussgewinde. In einer Ausgestaltung ist vorgesehen, dass die Verschraubungshülse ein Anschlussgewinde zur Anbindung an eine Anschlussgeometrie umfasst. Bevorzugt ist das Anschlussgewinde als Außengewinde ausgestaltet. In einer weiteren Ausgestaltung ist vorgesehen, dass das Anschlussgewinde und/oder der Anschlussabschnitt derart ausgestaltet ist, dass dieses in eine Ausnehmung eines nicht zur Erfindung gehörenden Anschlussgeometrie einschraubbar und/oder einbringbar ist.

Hierdurch wird eine vorteilhafte EMV-Dichtung ermöglicht. Unter einer EMV-Dichtung im Sinne der Erfindung ist insbesondere eine Vorrichtung zur Gewährleistung einer elektromagnetischen Verträglichkeit gegeben und /oder einen insbesondere induzierten Strom in eine oder aus einer Schirmung eines Langformteils ableitet.

Insbesondere braucht nicht auf eine Überlänge des abisolierten Schirmes geachtet werden. Insbesondere braucht der Schirm nicht an der Kontaktierungsstelle zu enden. Weiterhin vorteilhaft ist die Betätigung des Kontaktierungssystems unabhängig von der Betätigung der Druckschraube zur Abdichtung des Langformteils. Beispielsweise kann eine Zugentlastung des Kabels somit unabhängig von einer elektrischen Kontaktierung des Schirmes erfolgen.

Der Anschlussabschnitt weist das Betätigungsgewinde auf. Erfindungsgemäß ist vorgesehen, dass das Anschlussgewinde im Wesentlichen radial weiter außen als das Betätigungsgewinde zur Aufnahme des Betätigungselements angeordnet ist. Bevorzugt sind Anschlussgewinde und Betätigungsgewinde konzentrisch angeordnet. Bevorzugt sind Anschlussgewinde und Betätigungsgewinde im Wesentlichen auf der gleichen Höhe in Längsrichtung der Verschraubungshülse angeordnet. Erfindungsgemäß ist vorgesehen, dass das Anschlussgewinde radial außenseitig und das Betätigungsgewinde radial innenseitig an der Verschraubungshülse angeordnet sind. Erfindungsgemäß ist das Betätigungsgewinde im Anschlussabschnitt der Verschraubungshülse angeordnet. In einer weiteren Ausgestaltung beginnen Anschlussgewinde und Betätigungsgewinde an derselben Seite, der ersten Seite, der Verschraubungshülse beziehungsweise des Anschlussabschnitts. Bevorzugt grenzen Betätigungsgewinde und Anschlussgewinde an eine erste Stirnfläche der ersten Seite der Verschraubungshülse.

Das Kontaktierungssystem weist eine erste Seite und bevorzugt eine zweite, der ersten Seite gegenüberliegende Seite auf. Die erste Seite ist die Seite des Kontaktierungssystems, das einer Anschlussgeometrie zuwendbar beziehungsweise in diese einbringbar ist.

Eine nicht zur Erfindung gehörige Anschlussgeometrie kann beispielsweise eine Wandung oder ein Gehäuse sein. Insbesondere weist die Anschlussgeometrie eine Ausnehmung oder ein Gewinde auf, das für den Anschluss des Anschlussabschnitts der Verschraubungshülse geeignet ist.

Beispielhafte Aufzählungen sind im Sinne der Erfindung als nicht abschließend anzusehen, sondern können im Rahmen des allgemeinen Fachwissens ergänzt werden.

Erfindungsgemäß ist die Verschraubungshülse als Doppelnippel ausgestaltet. Erfindungsgemäß weist der Doppelnippel auf einer ersten Seite der Anschlussabschnitt auf. Bevorzugt weist der Doppelnippel auf einer zweiten Seite eine Aufnahme für eine Druckschraube auf. Weiter bevorzugt ist der Doppelnippel auf der zweiten Seite derart ausgestaltet, dass dieser zumindest teilweise ein Dichtelement aufweist.

In einer weiteren Ausgestaltung weist die Verschraubungshülse einen Schraubring, der bevorzugt Schlüsselanlageflächen umfasst, auf. Insbesondere begrenzt der Schraubring den Anschlussabschnitt. In einer Ausgestaltung der Verschraubungshülse als Doppelnippel kann der Schraubring zwischen dem Anschlussabschnitt und der Aufnahme für die Druckschraube angeordnet sein.

Die Verschraubungshülse weist in einer Ausgestaltung eine Druckstirnfläche auf. Bevorzugt ist die Druckstirnfläche auf einer Ausprägung beziehungsweise Materialanhäufung auf einer Innenwandung der Verschraubungshülse angeordnet. Bevorzugt ist die Druckstirnfläche eine Teilfläche eines zumindest teilweise innen umlaufenden Absatzes. In einer weiteren Ausgestaltung ist die Druckstirnfläche eine im Wesentlichen konische Fläche, deren Konusachse bevorzugt im Wesentlichen gleich ist mit einer Längsachse der Verschraubungshülse. Bevorzugt weist der Konus einen Winkel von etwa 30° bis etwa 60°, bevorzugt etwa 45° auf.

In einer Ausgestaltung ist vorgesehen, dass die Verschraubungshülse eine Druckstirnfläche umfasst, wobei das Klemmelement derart in oder auf die Verschraubungshülse einbringbar oder aufbringbar, bevorzugt einschraubbar oder aufschraubbar, ist, dass die Gegendruckstirnfläche des Betätigungselements die erste Stirnfläche des Klemmelementes kontaktiert.

In einer Ausgestaltung ist vorgesehen, dass die Verschraubungshülse eine Druckstirnfläche umfasst, wobei das Klemmelement derart in die Verschraubungshülse einbringbar, bevorzugt einschraubbar, ist, dass eine Druckstirnfläche der Verschraubungshülse eine zweite Stirnfläche des Klemmelementes kontaktiert und eine Gegendruckstirnfläche des Betätigungselements eine erste Stirnfläche des Klemmelementes kontaktiert

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet, insbesondere ist ein Toleranzbereich von ±20 %, bevorzugt ±10 %, weiter bevorzugt ±5 % vorgesehen.

Soweit verschiedene Wertebereiche, beispielsweise bevorzugte und weiter bevorzugte Wertebereiche, in der vorliegenden Erfindung angegeben sind, sind die Untergrenzen und die Obergrenzen der verschiedenen Wertebereiche miteinander kombinierbar.

Der Begriff "im Wesentlichen" gibt einen Toleranzbereich an, der für den Fachmann unter wirtschaftlichen und technischen Gesichtspunkten zu vertreten ist, so dass das entsprechende Merkmal noch als solches zu erkennen oder verwirklicht ist.

In einer Ausgestaltung ist vorgesehen, dass die Druckstirnfläche der Verschraubungshülse parallel zur zweiten Stirnfläche des Klemmelements in einer Montagesolllage anordenbar ist. Bevorzugt ist die zweite Stirnfläche konisch ausgestaltet. Weiter bevorzugt umfasst die zweite Stirnfläche im Wesentlichen den gleichen Winkel zu einer Konusachse beziehungswese Längsachse wie die Druckstirnfläche.

Die konische Ausgestaltung der Druckstirnfläche und/oder der zweiten Stirnfläche haben den Vorteil, dass diese leicht aneinander abgleiten können. Bei einer Kraft auf das Klemmelement in Richtung der Längsachse wird ein Teil der Kraft in eine radial-wirkende Kraft umgelenkt, so dass sich das Klemmelement insbesondere nach radial-innen verformen kann.

In einer Ausgestaltung ist vorgesehen, dass zwischen der ersten Stirnfläche und der Gegendruckstirnfläche und/oder der zweiten Stirnfläche und der Druckstirnfläche ein Entkopplungselement oder ein Federelement angeordnet ist. Bevorzugt kann ein Federelement eine Vorspannung auf das Klemmelement ausüben. Vorteilhaft kann mittels eines Federelements eine nicht eindeutige Geometrie des Schirms, eine Geometrieänderung bei einem Temperaturwechsel und/oder eine Bewegung der Teile des Kontaktierungssystems ausgeglichen werden, so dass ein bleibender Kontakt gewährleistet ist. Das Federelement kann beispielsweise eine Schraubenfeder oder eine Tellerfeder sein.

Das Kontaktierungssystem weist ein Betätigungselement auf. Bevorzugt umfasst das Betätigungselement eine vollständig in Längsrichtung durchgehende Ausnehmung, insbesondere zur Aufnahme beziehungsweise Durchführung des Langformteils. Weiter bevorzugt ist das Betätigungselement als Hohlzylinder ausgestaltet. Bevorzugt umfasst das Betätigungselement zumindest abschnittsweise, bevorzugt vollständig durchgängig, eine glatte Innenwandung. Weiter bevorzugt umfasst das Betätigungselement zumindest Abschnittsweise, bevorzugt vollständig durchgängig, eine in Längsrichtung des Betätigungselements ebene Innenwandung. Unter einer ebenen Innenwandung im Sinne der Erfindung ist eine Innenwandung ohne Materialanhäufungen, Vorsprüngen, Vertiefungen, Rillen, Absätzen und so weiter, die jeweils insbesondere radial nach innen ragen, zu verstehen. Das Betätigungselement umfasst bevorzugt ein Gewinde, weiter bevorzugt ein Außengewinde oder ein Innengewinde. Bevorzugt korrespondiert das Gewinde des Betätigungselements mit dem Betätigungsgewinde der Verschraubungshülse, so dass das Betätigungselement bevorzugt in die Verschraubungshülse einschraubbar oder auf die Verschraubungshülse aufschraubbar ist. Bevorzugt ist das Betätigungselement derart ausgestaltet, dass die Innenwandung des Betätigungselements im Wesentlichen mit einer Innenmantelfläche des Klemmelementes fluchtend ausgestaltet ist. Bevorzugt ist die Innenwandung des Betätigungselements und die Innenmantelfläche des Klemmelements mit einer Toleranz von etwa 0,01 mm bis etwa 1 mm, weiter bevorzugt von etwa 0,1 mm bis etwa 0,9 mm, fluchtend zueinander ausgestaltet. In einer Ausgestaltung ist vorgesehen, dass die Innenwandung des Betätigungselements einen größeren Radius beziehungsweise eine größere lichte Weite als die Innenmantelfläche des Klemmelements aufweist. Weiter bevorzugt ist vorgesehen, dass die Innenwandung des Betätigungselements und/oder die Innenmantelfläche des Klemmelements derart ausgestaltet ist beziehungsweise sind, das bei einer Montage des Kontaktierungssystems, bevorzugt bei einem Betätigen oder einem Verschrauben des Betätigungselements, der Schirm nicht staucht. Insbesondere kann dies erreicht werden, indem ein Innendurchmesser des Betätigungselements über seine Länge, bevorzugt über seine vollständige Länge, größer oder gleich einem Innendurchmesser des Klemmelements, insbesondere im unbetätigten Zustand, ist. Weiter bevorzugt ist vorgesehen, dass die Innenwandung des Betätigungselements und/oder die Innenmantelfläche des Klemmelements derart ausgestaltet ist beziehungsweise sind, das bei einer Montage des Kontaktierungssystems, bevorzugt bei einem Betätigen oder Verschrauben des Betätigungselements, der Schirm über eine Länge des Betätigungselements aus diesem heraus ragen kann. Die genannten verschiedenen Ausgestaltungen ermöglichen vorteilhaft eine große Toleranz beim Ablängen des Schirmes. Im Gegensatz zu aus dem Stand der Technik bekannten Kontaktierungssystemen, die eine bestimmte Länge des freigelegten Schirmes erfordern, damit diese den Schirm nicht stauchen oder verformen, wird mit dem vorgeschlagenen Betätigungselement erreicht, dass der Schirm nicht auf eine maximal zulässige Länge begrenzt ist. Hierdurch wird eine Montage wesentlich vereinfacht.

Bevorzugt kann das Betätigungselement in die Verschraubungshülse aufgeschraubt, eingeschraubt oder festgezogen werden, wenn der Anschlussabschnitt des Betätigungselementes in einer Anschlussgeometrie angeordnet ist. Diese Ausgestaltung ermöglicht vorteilhaft die flexible Montage des Kontaktierungssystem unabhängig von der Montage des Langformteils an einem Verbraucher, einer Zugentlastung und/oder einer Dichtung. Beispielsweise wird das Kontaktierungssystem mittels des Anschlussgewindes in eine Anschlussgeometrie geschraubt. Das abisolierte Langformteil wird derart durch das Kontaktierungssystem, insbesondere die Verschraubungshülse, das Klemmelement und das Betätigungselement gefädelt, dass ein Schirm des Langformteils im Wesentlichen im Bereich des Klemmelementes angeordnet ist. Hierbei kann das Betätigungselement in oder auf das Betätigungsgewinde der Verschraubungshülse leicht geschraubt sein. Das Langformteil kann nun bestimmungsgemäß beispielsweise an einem Verbraucher montiert werden. Anders als bei aus dem Stand der Technik bekannten Lösungen ist hierbei eine hohe Toleranz gegeben: Sollte das Kabel etwas kürzer oder etwas länger als vorgesehen sein, ist das Klemmelement weiterhin um den abisolierten Bereich des Langformteils angeordnet. Besonders vorteilhaft braucht dabei der abisolierte Teil des Schirms des Langformteils keine exakte Länge aufweisen, da das Klemmelement beliebig insbesondere in einer Längsposition am abisolierten Schirm positioniert werden kann.

Das Betätigungselement weist eine Gegendruckstirnfläche auf. In einer Ausgestaltung ist vorgesehen, dass die Gegendruckstirnfläche des Betätigungselements insbesondere zumindest teilweise parallel zur ersten Stirnfläche des Klemmelements in der Montagesolllage anordenbar ist. Bevorzugt interagiert die Gegendruckstirnfläche mit der ersten Stirnfläche, wenn das Betätigungselement in die Verschraubungshülse eingeschraubt beziehungsweise festgezogen wird. Bevorzugt ist die erste Stirnfläche konisch ausgestaltet. Weiter bevorzugt umfasst die erste Stirnfläche im Wesentlichen den gleichen Winkel zu einer Konusachse beziehungswese Längsachse wie die Gegendruckstirnfläche.

Die konische Ausgestaltung der Gegendruckstirnfläche und/oder der ersten Stirnfläche haben den Vorteil, dass diese leicht aneinander abgleiten können. Bei einer Kraft auf das Klemmelement in Richtung der Längsachse, insbesondere beim Einschrauben oder Festziehen des Betätigungselements wird ein Teil der Kraft in eine radial-wirkende Kraft umgelenkt, so dass sich das Klemmelement insbesondere nach radial-innen verformen kann.

Das Kontaktierungssystem weist das Klemmelement auf. Dieses ist insbesondere hohlzylindrisch ausgestaltet. Bevorzugt hat das Klemmelement eine Ausgestaltung einer Hülse. Weiter bevorzugt ist das Klemmelement aus einem elektrisch leitenden Material ausgestaltet, bevorzugt ein Metall. Das Klemmelement umfasst die Innenmantelfläche und bevorzugt eine Außenmantelfläche sowie die erste Stirnfläche und bevorzugt eine zweite Stirnfläche. Das Klemmelement ist derart ausgestaltet, dass dieses bei Ausübung einer radialen Kraft auf zumindest die erste Stirnfläche, die zweite Stirnfläche und/oder die Außenmantelfläche radial verformbar ist. Bevorzugt ist der Innenradius mittels einer radialen Kraft verkleinerbar. In einer bevorzugten Ausgestaltung ist vorgesehen, dass mittels einer entlang der Längsachse gerichteten Kraft auf die erste und/oder zweite Stirnfläche des Klemmelementes diese zumindest teilweise nach radial innen umlenkbar ist. In einer weiteren Ausgestaltung ist vorgesehen, dass die erste Stirnfläche und/oder die zweite Stirnfläche des Klemmelements eine Fase umfasst. Weiter bevorzugt ist zumindest die erste Stirnfläche und/oder die zweite Stirnfläche konisch ausgestaltet. Weiter bevorzugt umfasst zumindest die erste Stirnfläche und/oder die zweite Stirnfläche eine erste Teilfläche, die einen Flächenvektor aufweist, der im Wesentlichen in Richtung der Längsachse des Klemmelementes gerichtet ist und weiter bevorzugt eine zweite Teilfläche, die konisch ausgestaltet ist. In einer bevorzugten Ausgestaltung ist die erste Stirnfläche und/oder die zweite Stirnfläche im Wesentlichen vollständig konisch ausgestaltet. In einer weiteren Ausgestaltung ist vorgesehen, dass die erste Stirnfläche und/oder die zweite Stirnfläche eine Rundung aufweist.

Bevorzugt sind Klemmelement, Verschraubungselement, Betätigungselement, Stützhülse und/oder Quetschhülse aus einem elektrisch leitfähigen Material.

In einer Ausgestaltung ist vorgesehen, dass das Klemmelement eine in Richtung einer Längsachse des Kontaktierungssystems vollständig durchgängige Schlitzung, mehrere am Umfang verteilte Schlitzungen oder keine Schlitzung umfasst. Eine vollständig durchgängige Schlitzung hat den Vorteil, dass sich das Klemmelement im Wesentlichen vollflächig an den Schirm des Langformteils anlegen kann. In einer weiteren Ausgestaltung ist vorgesehen, dass der Schirm eine Vielzahl von in Längsrichtung teilweise durchgehenden Schlitzungen umfasst. Das Klemmelement ist bevorzugt "kammförmig" ausgestaltet. Bevorzugt umfasst das Klemmelement eine Vielzahl von Laschen zwischen den Schlitzungen, die elastisch oder plastisch verformbar sind, wird eine radiale Kraft auf diese ausgeübt. In einer weiteren Ausgestaltung ist vorgesehen, dass das Klemmelement keine Schlitzung umfasst. Bevorzugt ist eine Wandstärke im Bereich im Wesentlichen zumindest abschnittsweise, bevorzugt über eine vollständige Länge des Klemmelementes, so bemessen, dass das Klemmelement plastisch und/oder elastisch verformbar ist, wenn eine radiale Kraft mittels des Betätigungselementes auf dieses wirkt.

In einer weiteren Ausgestaltung ist vorgesehen, dass die Verschraubungshülse einteilig oder mehrteilig, bevorzugt zweiteilig, mit dem Klemmelement ausgestaltet ist. Insbesondere bei einer mehrteiligen, bevorzugt zweiteiligen, Ausgestaltung von Verschraubungshülse und Klemmelement, kann das Klemmelement im Inneren der Verschraubungshülse aufgenommen werden. Insbesondere ist bei einer einteiligen Ausgestaltung der Verschraubungshülse mit dem Klemmelement das Klemmelement an der ersten Seite der Verschraubungshülse angeordnet. Nicht wie in der beanspruchten Erfindung erstreckt sich das einteilig mit der Verschraubungshülse verbundene Klemmelement ausgehend von dem Betätigungsgewinde, das bevorzugt als Außengewinde ausgestaltet ist, in Längsrichtung der Verschraubungshülse von diesem weg. Weiter bevorzugt erstreckt sich das einteilig mit der Verschraubungshülse verbundene Klemmelement ausgehend vom Anschlussgewinde der Verschraubungshülse in Längsrichtung der Verschraubungshülse von diesem weg. Erfindungsgemäß ist vorgesehen, dass das Betätigungsgewinde in Längsrichtung zwischen dem Anschlussgewinde und dem einteilig mit der Verschraubungshülse ausgebildeten Klemmelement angeordnet ist. Insbesondere ist das Betätigungsgewinde nicht wie in der beanspruchten Erfindung ein Außengewinde. Weiter bevorzugt weist das Betätigungsgewinde einen kleineren Außendurchmesser als das Anschlussgewinde auf. In einer Ausgestaltung nicht wie in der beanspruchten Erfindung ist vorgesehen, das Betätigungselement ein Innengewinde aufweist. Bevorzugt ist ein Außendurchmesser des Betätigungselements kleiner oder gleich einem Außendurchmesser des Anschlussgewindes.

Bevorzugt ist das einteilig mit der Verschraubungshülse verbundene Klemmelement mit der Verschraubungshülse materialverbunden oder materialeinheitlich. Bevorzugt werden Verschraubungshülse und Klemmelement aus einem Material hergestellt. Das Klemmelement umfasst bevorzugt ein leitfähiges Material. Weiter bevorzugt umfasst das Klemmelement zumindest ein Material ausgesucht aus einer Gruppe umfassend ein Metall, insbesondere Kupfer, leitfähigen Kunststoff und/oder Carbon.

Das Kontaktierungssystem umfasst in einer Ausgestaltung eine Stützhülse, die bevorzugt unter einem Schirm eines Langformteils anordenbar beziehungsweise schiebbar ist, und/oder eine Quetschhülse, die zwischen Schirm und Klemmelement anordenbar ist. Bevorzugt ist die Stützhülse hohlzylindrisch ausgestaltet. Weiter bevorzugt ist die Stützhülse etwa so lang oder länger als das Klemmelement, bevorzugt etwa 1,5-mal bis etwa 2-mal so lang wie das Klemmelement. Die Länge der Stützhülse in Relation zur Länge des Klemmelementes ist insbesondere die Toleranz, mit der das Klemmelement insbesondere in Längsrichtung am Schirm angebracht werden kann. In einer Ausgestaltung ist die Stützhülse als rigide Hülse ausgestaltet. Bevorzugt ist die Stützhülse aus einem elektrisch leitenden Material, bevorzugt Metall ausgestaltet. Insbesondere ist die Stützhülse unter den Schirm des Langformteils schiebbar bevor dieses in die Verschraubungshülse eingebracht wird. Weiterhin bevorzugt ist die Stützhülse im Wesentlichen in einem Beriech anordenbar, in dem das Klemmelement angeordnet ist, insbesondere so, dass das Klemmelement bei Beaufschlagung einer radialen Kraft mittelbar oder unmittelbar gegen die Stützhülse drückt. Vorteilhafterweise ist der Schirm zwischen Stützhülse und Klemmelement einklemmbar. Vorteilhaft kann mittels der Stützhülse ein höherer Druck auf den Schirm aufgebracht werden als aus dem Stand der Technik bekannten Systemen. Insbesondere wird durch diese Ausgestaltung erreicht, dass elektrische Ströme von etwa 100 A bis etwa 1000 A, bevorzugt zumindest etwa 300 A bis etwa 500 A, abgeleitet werden können.

In einer Ausgestaltung ist die Stützhülse quetschbar ausgestaltet. Die insbesondere quetschbare Stützhülse wird insbesondere vor dem Einbringen des Kabels in die Verschraubungshülse unter dem abisolierten Schirm des Langformteils aufgequetscht beziehungsweise mittels plastischer Verformung reibschlüssig befestigt und ist dort bevorzugt permanent angeordnet. In einer Ausgestaltung weist die Stützhülse einen Quetschbereich auf. In einer weiteren Ausgestaltung weist die Stützhülse einen Quetschbereich und einen Stützbereich auf, der bevorzugt nicht für eine Verquetschung vorgesehen ist. Bevorzugt ist der Quetschbereich dünnwandiger ausgestaltet als der Stützbereich. Bevorzugt ist der Stützbereich dünnwandiger ausgestaltet als der Quetschbereich. Insbesondere wird die gequetschte Stützhülse zwischen Schirm und einer Ader des Langformteils angeordnet. Vorteil der Ausgestaltung ist, dass die Stützhülse unverlierbar an dem Langformteil angeordnet ist.

In einer weiteren Ausgestaltung wird bevorzugt zusätzlich zu einer bevorzugt aufgequetschten Stützhülse eine Quetschhülse auf dem Langformteil aufgebracht. Bevorzugt ist vorgesehen, dass die Quetschhülse zumindest über dem abisolierten Schirm, weiter bevorzugt über der Stützhülse aufgequetscht wird. In einer Ausgestaltung werden Quetschhülse und Stützhülse ein einem Arbeitsschritt verquetscht. Die Quetschhülse ist bevorzugt länger als die Stützhülse, weiter bevorzugt länger als der abisolierte Bereich des Schirms. In einer Ausgestaltung umfasst die Quetschhülse einen Quetschabschnitt. In einer weiteren Ausgestaltung umfasst die Quetschhülse einen Hüllabschnitt. Bevorzugt ist der Quetschabschnitt für eine Verquetschung vorgesehen und weiter bevorzugt ist der Hüllabschnitt nicht für eine Verquetschung vorgesehen. Weiter bevorzugt ist der Hüllabschnitt zumindest abschnittsweise dünnwandiger als der Quetschabschnitt. Vorteilhafterweise wird durch diese Ausgestaltung der Bereich vergrößert, in dem das Klemmelement am Langformteil zur elektrischen Kontaktierung anordenbar ist. Bevorzugt ist der abisolierte Schirm vollständig von der Quetschhülse abdeckbar. Vorteil dieser Ausgestaltung ist, dass bei einer häufigen Montage und Demontage des Langformteils der Schirm nicht beschädigt wird beziehungsweise ausfranst.

Das nicht zur Erfindung gehörende Langformteil weist bevorzugt einen Mantel, einen Schirm und zumindest eine Ader auf. Der Schirm kann als Schirmgeflecht, Armierung oder Folie ausgestaltet sein.

Insbesondere ist der Schirm elektrisch leitfähig und weiter bevorzugt sichert eine elektromagnetische Verträglichkeit des Langformteils. In einer Ausgestaltung des Kontaktierungssystems ist vorgesehen, dass ein zumindest teilweise abisoliertes Langformteil in das Kontaktierungssystem derart einbringbar ist, dass bei einer Verschraubung des Betätigungselements mit der Verschraubungshülse das Klemmelement derart verpresst ist, dass mittels zumindest eines Teils der Innenmantelfläche des Klemmelements ein elektrischer Kontakt mit einem Schirm oder mit einem mit dem Schirm verbundenen Element herstellbar ist.

Eine beispielhafte Ausgestaltung des Kontaktierungssystems umfasst eine Verschraubungshülse, ein Betätigungselement und einen Klemmelement. Das Klemmelement umfasst eine zweite Stirnfläche und eine erste Stirnfläche sowie eine Außenmantelfläche und eine Innenmantelfläche. Das Klemmelement weist in Richtung der Längsachse eine vollständig durchgängige Schlitzung auf, wobei die Schlitzung ein Spaltmaß umfasst, das es dem Klemmelement ermöglicht, bei einer radialen Kraft auf dieses zusammengedrückt zu werden.

Das Betätigungselement umfasst ein Gewinde, mit dem dieses in die Verschraubungshülse einschraubbar oder auf dieses aufschraubbar ist. Weiterhin umfasst das Betätigungselement eine Gegendruckstirnfläche, die im Montagezustand mit der ersten Stirnfläche des Klemmelements interagiert.

Das Klemmelement ist beispielhaft in die Verschraubungshülse eingesetzt und liegt mit seiner zweiten Stirnfläche an der Druckstirnfläche der Verschraubungshülse an. Das Betätigungselement ist in die Verschraubungshülse geschraubt und liegt mit der Gegendruckstirnfläche an der ersten Stirnfläche des Klemmelements an. Wird das Betätigungselement weiter eingeschraubt, wird das Klemmelement auf seinen Stirnflächen mit einer Kraft beaufschlagt. Durch die konische Ausgestaltung der Stirnflächen und der Druckstirnfläche sowie der Gegendruckstirnfläche wird die eingeleitete Kraft nach radial innen umgelenkt und die erste Stirnfläche gleitet an der Druckstirnfläche und die zweite Stirnfläche gleitet an der Gegendruckstirnfläche ab. Der Innenradius des Klemmelementes wird somit verkleinert und das Spaltmaß der Schlitzung verringert sich.

In dem Kontaktierungssystem kann ein Langformteil mit einem Schirm und einem Mantel angeordnet werden. Das Langformteil, das in beispielhaft die Verschraubungshülse eingefädelt ist, weist einen Abschnitt auf, bei dem der Mantel entfernt ist. Unter dem abisolierten Schirm kann eine Stützhülse angeordnet sein. Um den Schirm herum ist das Klemmelement angeordnet. Das Klemmelement kann zudem im Bereich der Stützhülse angeordnet sein. Wird das Betätigungselement festgezogen, verformt sich das Klemmelement und übt mit seiner Innenmantelfläche einen Druck auf den Schirm aus.

Durch die Stützhülse entstehen keine großen Verformungen des Klemmelementes und/oder des Schirmes, sondern die nach radial innen wirkende Kraft wird zur Verklemmung des Schirmes zwischen Klemmelement und Stützhülse verwendet. Vorteilhaft wird durch dies Stützhülse beispielsweise dafür gesorgt, dass immer ein gleicher Klemmdurchmesser vorliegt, der bevorzugt gleich einem Durchmesser der Stützhülse zuzüglich zwei-mal eine Schirmstärke ist. Weiterhin vorteilhaft bietet die Stützhülse ein Widerlager für die Klemmung mittels des Klemmelements. Insbesondere kann vor dem Festziehen des Betätigungselements die Position des Kontaktierungssystems gegenüber dem Langformteil verändert werden. Somit kann sich die letztliche Position des betätigten Kontaktierungssystems auf dem Langformteil von der Vormontage-Position unterscheiden.

In einer weiteren beispielhaften Ausgestaltung kann die Stützhülse unter dem abisolierten Schirm angeordnet werden, während eine Quetschhülse über dem abisolierten Schirm angeordnet ist. Wird die Quetschhülse auf dem Langformteil verquetscht wird ebenfalls die Stützhülse verquetscht. Durch die plastische Verformung von Quetschhülse und Stützhülse bleiben diese Bauteile des Kontaktierungssystems permanent am Langformteil und schützen den Schirm insbesondere bei häufiger Montage und Demontage des Langformteils. Durch die Quetschhülse kann ein größerer Toleranzbereich geschaffen werden, auf welchem das Klemmelement zur Ableitung von elektrischen Strömen auf dem Langformteil positionierbar ist, insbesondere wenn die Quetschhülse länger ist als der abisolierte Bereich. Weiterhin bietet die Oberfläche der Quetschhülse vorteilhaft einen besseren elektrischen Kontakt zum Klemmelement als beispielsweise ein Schirm aus einem Drahtgeflecht. Vorteilhafterweise ist eine Oberfläche der Quetschhülse und/oder eine in bezeichnete Innenmantelfläche des Klemmelements derart ausgestaltet, dass eine elektrische Kontaktierung verbessert wird, beispielsweise aufgeraut oder geglättet.

Die Verschraubungshülse ist als Doppelnippel ausgestaltet, so dass diese beispielsweise eine Druckschraube und ein Dichtelement zur Abdichtung und Fixierung eines Langformteils aufnehmen kann.

In einer weiteren beispielhaften Ausgestaltung ist vorgesehen, dass das Kontaktierungssystems, eine Verschraubungshülse umfasst, die einstückig, bevorzugt einteilig, mit dem Klemmelement ausgestaltet ist. Das Klemmelement weist beispielhaft auf einer ersten Seite eine Anzahl von Schlitzungen auf, insbesondere um eine Verformung zu erleichtern. Das Betätigungselement weist eine Gegendruckfläche auf seiner Innenseite auf sowie ein Gewinde, das bevorzugt als Innengewinde ausgestaltet ist, auf. Das Betätigungsgewinde ist zwischen dem Anschlussgewinde und dem Klemmelement angeordnet. Wenn das Betätigungselement auf das Betätigungsgewinde aufgeschraubt wird, wird das Klemmelement plastisch und/oder elastisch verformt, indem die Gegendruckfläche auf eine erste Stirnfläche des Klemmelements wirkt und eine Kraft, die durch Festziehen des Betätigungselementes aufgebracht wird, zumindest teilweise nach radial innen umgelenkt wird.

Weiterhin wird eine Verwendung eines oben beschriebenen Kontaktierungssystems zum mittelbaren oder unmittelbaren Kontaktieren eines freiliegenden Schirms eines Langformteils vorgeschlagen.

In einer Ausgestaltung der Verwendung des Kontaktierungssystems ist vorgesehen, dass das zumindest teilweise abisolierte Langformteil in das Kontaktierungssystem derart einbringbar ist, dass eine Stützhülse zwischen zumindest einer Ader des Langformteils und dem Schirm des Langformteils anordenbar ist. Die Stützhülse kann beispielsweise von Hand unter den abisolierten Schirm geschoben und/oder mittels eines Werkzeuges unter dem Schirm verquetscht werden.

In einer Ausgestaltung der Verwendung des Kontaktierungssystems ist vorgesehen, dass das zumindest teilweise abisolierte Langformteil in das Kontaktierungssystem derart einbringbar ist, dass bei einer Verschraubung des Betätigungselements mit der Verschraubungshülse das Klemmelement derart verformbar ist, dass das Klemmelement mittelbar oder unmittelbar eine radiale Kraft auf den Schirm ausübt. Insbesondere wird zumindest eine in Längsrichtung wirkende Kraft zumindest teilweise nach radial innen umgelenkt. Bevorzugt wird mittels zumindest einer konischen Stirnfläche des Klemmelementes, einer konischen Druckstirnfläche der Verschraubungshülse und/oder einer konischen Gegendruckstirnfläche des Betätigungselements eine in Längsrichtung des Kontaktierungssystems wirkende Kraft nach radial innen zumindest teilweise umgelenkt. Das Klemmelement kontaktiert den Schirm mit seinem Innenmantel bevorzugt im Wesentlichen vollflächig.

In einer Ausgestaltung der Verwendung des Kontaktierungssystems ist vorgesehen, dass das Klemmelement den Schirm gegen die Stützhülse presst. Durch das Gegenlager, das durch die Stützhülse gebildet wird, kann das Klemmelement eine hohe Anpresskraft auf den Schirm ausüben, wodurch bevorzugt sichergestellt wird, dass hohe Ströme beispielsweise von etwa 100 A bis etwa 1000 A übertragen werden können.

In einer weiteren Ausgestaltung ist vorgesehen, dass mittels eines auf einer zweiten Seite der Verschraubungshülse aufschraubbaren Druckschraube und eines Dichteelements das Langformteil kraftschlüssig gehalten und/oder abgedichtet wird. Vorteilhaft kann mittels der Druckschraube und des Dichteelements eine Zugentlastung durch die kraftschlüssige Verbindung des Langformteils ermöglicht werden. Die Zugentlastung ist vorteilhaft unabhängig von der elektrischen Verbindung des Klemmelementes zum Schirm befestigbar und lösbar.

Weiterhin wird ein Verschraubungssystem umfassend ein oben beschriebenes Kontaktierungssystem vorgeschlagen.

Erfindungsgemäß ist die Verschraubungshülse des Kontaktierungssystems des Verschraubungssystems als Doppelnippel ausgestaltet. In einer weiteren Ausführungsform ist vorgesehen, dass die Verschraubungshülse einen Anschlussabschnitt und einen Druckaufnahmeabschnitt aufweist. Bevorzugt umfasst der Druckaufnahmeabschnitt ein Druckaufnahmegewinde, das weiter bevorzugt als Außengewinde ausgestaltet ist. In einer Ausgestaltung umfasst das Verschraubungssystem eine Druckschraube, die auf die Verschraubungshülse, bevorzugt auf den Druckaufnahmeabschnitt schraubbar ist. In die Verschraubungshülse, bevorzugt in den Druckaufnahmeabschnitt der Verschraubungshülse, ist bevorzugt ein Dichtelement zumindest teilweise einsetzbar. Der Dichtelement ist bevorzugt mittels der Druckschraube durch Aufschrauben auf den Druckaufnahmeabschnitt derart verformbar, dass das Langformteil, das in das Verschraubungssystem einbringbar ist, in diesem abgedichtet und/oder zugentlastet ist. Bevorzugt ist vorgesehen, dass die Betätigung der Druckschraube von der Betätigung des Kontaktierungssystem vollständig unabhängig erfolgen kann. So kann das Langformteil verschraubt, das heißt durch eine Anschlussgeometrie geführt und dort abgedichtet und/oder zugentlastet werden, ohne dass das Kontaktierungssystem betätigt wird. Vorteilhaft kann das Betätigen des Kontaktierungssystems durch Einschrauben beziehungsweise Festziehen des Betätigungselements zu einem beliebigen Zeitpunkt vor oder nach der Betätigung der Druckschraube erfolgen.

Weiterhin wird ein Verfahren zur Ableitung von elektrischen Strömen eines Schirms eines Langformteils vorgeschlagen umfassend die Schritte:
a. Bereitstellen eines oben beschriebenen Kontaktierungssystems,
b. teilweises Freilegen eines Schirms eines Langformteils und Einbringen dieses in das Kontaktierungssystem,
c. Verschrauben eines Betätigungselements des Kontaktierungssystems mit einer Verschraubungshülse, wobei das Betätigungselements auf ein Klemmelement wirkt derart, dass das Klemmelement eine radiale Kraft auf den Schirm des Langformteils oder auf ein mit dem Schirm verbundenes Element ausübt, wobei mittels Verschrauben des Betätigungselements das Klemmelement mit dem Schirm oder mit einem mit dem Schirm verbundenen Element elektrisch kontaktiert wird

In einer Ausgestaltung ist vorgesehen, dass mittels Einschrauben des Betätigungselements das Klemmelement zumindest teilweise radial verformt wird. Bevorzugt wird eine Kraft auf die erste Stirnfläche und/oder die zweite Stirnfläche des Klemmelementes ausgeübt, die weiter bevorzugt konisch ausgestaltet sind. Durch die bevorzugt zumindest teilweise geschlitzte Ausgestaltung des Klemmelementes kann die erste und/oder zweite Stirnfläche auf der Druckstirnfläche der Verschraubungshülse und/oder der Gegendruckfläche des Betätigungselements abgleiten und den Innenradius des Klemmelementes zumindest teilweise verringern und/oder eine Kraft auf ein Langformteil, dessen abisolierten Schirm oder der Quetschhülse, um das, den oder die das Klemmelement angeordnet ist, ausüben.

In einer Ausgestaltung ist vorgesehen, dass eine Stützhülse unter den Schirm platziert wird, bevor das Langformteil in das Kontaktierungssystem eingebracht wird. Bevorzugt wird die Stützhülse mittels eines Klebebandes oder ähnlichem fixiert, beispielsweise durch verengen des Schirms, bevor das Langformteil in die Verschraubungshülse gefädelt wird.

In einer Ausgestaltung ist vorgesehen, dass das Einschrauben des Betätigungselements zur Verklemmung des Klemmelements mit dem Schirm oder an einem mit dem Schirm verbundenen Element, bevorzugt einer Quetschhülse als das mit dem Schirm verbundene Element, vor oder nach einem Anschluss des Langformteils an einen Verbraucher erfolgt.

Der Schirm braucht nicht an der Kontaktierungsstelle zu enden.

Weitere vorteilhafte Ausgestaltungen gehen aus den nachfolgenden Zeichnungen hervor. Die dort dargestellten Weiterbildungen sind jedoch nicht beschränkend auszulegen, vielmehr können die dort beschriebenen Merkmale untereinander und mit den oben beschriebenen Merkmalen zu weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen:
- Fig. 1: eine Explosionsansicht eines Kontaktierungssystems;
- Fig. 2: eine teilgeschnittene Ansicht des zusammengebauten Kontaktierungssystems aus Fig. 1;
- Fig. 3: eine Ansicht einer weiteren Ausgestaltung des Kontaktierungssystems;
- Fig. 4: eine Schnittansicht des Kontaktierungssystems aus Fig. 3 mit herausgeschraubtem Betätigungselement;
- Fig. 5.: eine Schnittansicht des Kontaktierungssystems aus Fig. 3 mit eingeschraubter Betätigungselement;
- Fig. 6: eine Schnittansicht eines Langformteils mit Stützhülse und Quetschhülse - unverquetscht;
- Fig. 7: eine Schnittansicht eines Langformteils mit Stützhülse und Quetschhülse - verquetscht;
- Fig. 8: eine schematische Schnittansicht eines Langformteils mit Stützhülse und Quetschhülse in einer Verschraubungshülse mit herausgeschraubtem Betätigungselement;
- Fig. 9: eine schematische Schnittansicht des Langformteils aus Fig. 8 in einer Verschraubungshülse mit eingeschraubtem Betätigungselement;
- Fig. 10: eine weitere Ausgestaltung des Kontaktierungssystems; und
- Fig. 11: eine Explosionsansicht des Kontaktierungssystems gemäß Fig. 10.

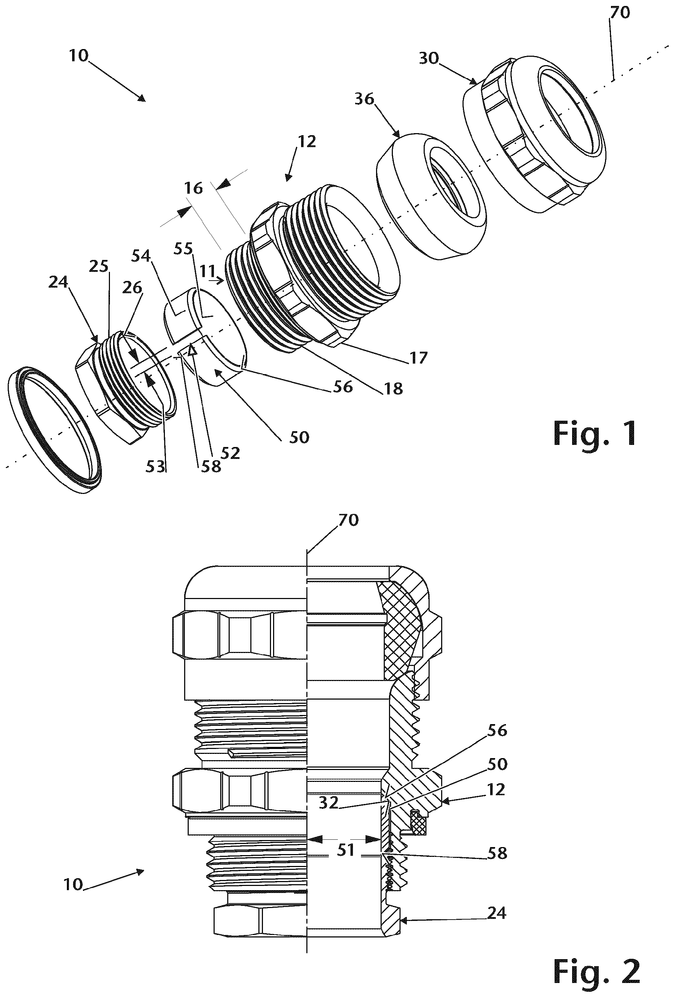

Fig. 1 zeigt eine Explosionsansicht eines Kontaktierungssystems 10 mit einer Verschraubungshülse 12, einem Betätigungselement 24 und ein Klemmelement 50. Das Klemmelement 50 umfasst eine zweite Stirnfläche 56 und eine erste Stirnfläche 58 sowie eine Außenmantelfläche 54 und eine Innenmantelfläche 55. Das Klemmelement 50 weist in Richtung der Längsachse 70 des Kontaktierungssystems 10 eine vollständig durchgängige Schlitzung 52 auf, wobei die Schlitzung ein Spaltmaß 53 umfasst, das es dem Klemmelement 50 ermöglicht, bei einer radialen Kraft auf dieses zusammengedrückt zu werden.

Das Betätigungselement 24 umfasst ein Gewinde 25, mit dem dieses in die Verschraubungshülse 12 einschraubbar ist. Weiterhin umfasst das Betätigungselement 24 eine Gegendruckstirnfläche 26, die im Montagezustand mit der ersten Stirnfläche 58 des Klemmelements 50 interagiert.

Die Verschraubungshülse 12 ist als Doppelnippel ausgestaltet, so dass diese eine Druckschraube 30 und ein Dichtelement 36 zur Abdichtung und Fixierung eines Langformteils aufnehmen kann. Die Verschraubungshülse 12 weist auf einer ersten Seite 11 einen Anschlussabschnitt 16 auf, der zu einer Seite von einem Schraubring 17 begrenzt ist. Mit dem Anschlussabschnitt 16 kann die Verschraubungshülse 12 in eine hier nicht gezeigte Anschlussgeometrie eingebracht beziehungsweise mittels des Anschlussgewindes 18 eingeschraubt werden.

Fig. 2 zeigt eine zur Hälfte geschnittene Ansicht des Kontaktierungssystems 10 der Fig. 1 in zusammengebauter Form. Das Klemmelement 50 ist in die Verschraubungshülse 12 eingesetzt und liegt mit seiner zweiten Stirnfläche 56 an der Druckstirnfläche 32 der Verschraubungshülse 12 an. Das Betätigungselement 24 ist in die Verschraubungshülse 12 geschraubt und liegt mit der Gegendruckstirnfläche 26 an der ersten Stirnfläche 58 des Klemmelements 50 an. Wird das Betätigungselement 24 weiter eingeschraubt, wird das Klemmelement 50 auf seinen Stirnfläche 56 und 58 mit einer Kraft beaufschlagt. Durch die konische Ausgestaltung der Stirnflächen 56 und 58 und der Druckstirnfläche 32 sowie der Gegendruckstirnfläche 26 wird die eingeleitete Kraft nach radial innen umgelenkt und die erste Stirnfläche 56 gleitet an der Druckstirnfläche 32 und die zweite Stirnfläche 58 gleitet an der Gegendruckstirnfläche 26 ab. Der Innenradius 51 des Klemmelementes 50 wird somit verkleinert und das Spaltmaß 53 der Schlitzung 52 wird verringert.

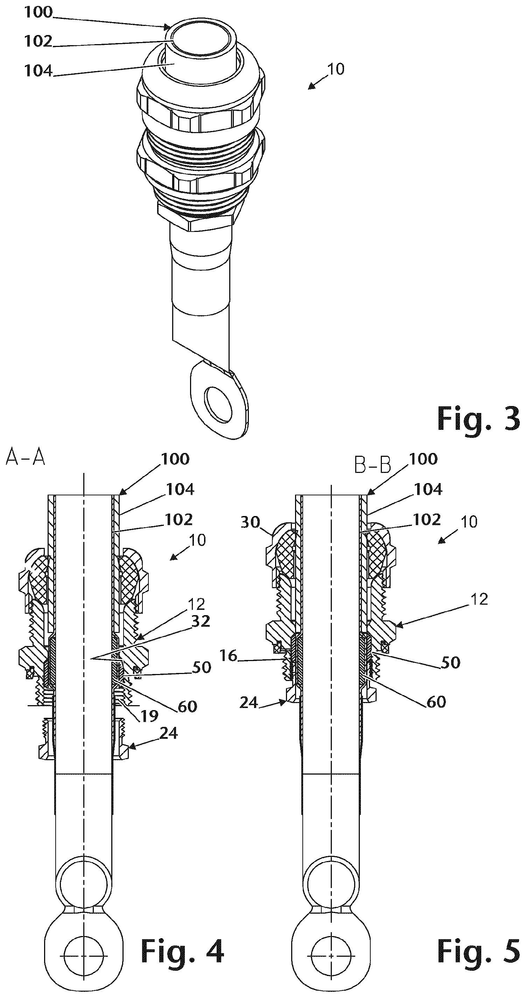

Fig. 3 zeigt eine Ansicht einer weiteren Ausgestaltung des Kontaktierungssystems 10. In dem Kontaktierungssystem 10 ist ein Langformteil 100 mit einem Schirm 102 und einem Mantel 104 angeordnet.

Fig. 4 zeigt das Kontaktierungssystem 10 aus Fig. 3 in einer Schnittansicht, bei der das Betätigungselement 24 nicht in die Verschraubungshülse 12 eingeschraubt ist. Das Langformteil 100, das in die Verschraubungshülse 12 eingefädelt ist, weist einen der Übersicht halber nicht bezeichneten Abschnitt auf, bei dem der Mantel 104 entfernt ist. Unter dem abisolierten Schirm 102 ist eine Stützhülse 60 angeordnet. Um den Schirm 102 herum ist das Klemmelement 50 angeordnet. Das Klemmelement 50 ist zudem im Bereich der Stützhülse 60 angeordnet.

Fig. 5 zeigt das Kontaktierungssystem 10 aus Fig. 4, bei der das Betätigungselement 24 in die Verschraubungshülse 12 eingeschraubt ist. Wird das Betätigungselement 24 festgezogen, verformt sich das Klemmelement 50 und übt mit seiner hier nicht bezeichneten Innenmantelfläche einen Druck auf den Schirm 102 aus. Durch die Stützhülse 60 entstehen keine großen Verformungen des Schirmes 102, sondern die nach radial innen wirkende Kraft wird zur Verklemmung des Schirmes 102 zwischen Klemmelement 50 und Stützhülse 60 verwendet. Insbesondere kann vor dem Festziehen des Betätigungselements 24 die Position des Kontaktierungssystems 10 auf dem Langformteil 100 verändert werden. So zeigt Fig. 5, dass die letztliche Position des betätigten Kontaktierungssystems 10 auf dem Langformteil 100 in Fig. 5 sich von der Position bei der Vormontage in Fig. 4 unterscheidet. Insbesondere braucht nicht auf eine Überlänge des abisolierten Schirmes 102 geachtet werden. Weiterhin vorteilhaft ist die Betätigung des Kontaktierungssystems 10 unabhängig von der Betätigung der Druckschraube 30 zur Abdichtung des Langformteils 100.

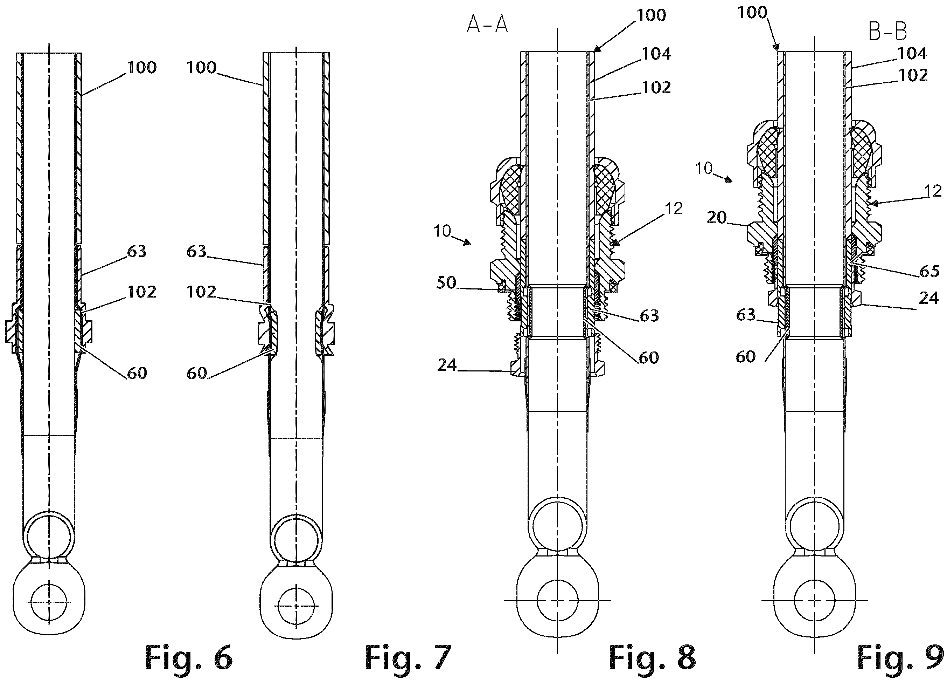

Fig. 6 zeigt ein Langformteil 100 mit einer Stützhülse 60 und einer Quetschhülse 63. Die Stützhülse ist unter dem abisolierten Schirm 102 angeordnet, während die Quetschhülse 63 über dem abisolierten Schirm 102 angeordnet ist.

Fig. 7 zeigt die verquetschte Quetschhülse 63, wobei ebenfalls die Stützhülse 60 verquetscht wurde. Durch die plastische Verformung von Quetschhülse 63 und Stützhülse 60 bleiben diese Bauteile permanent am Langformteil 100 und schützen den Schirm 102 insbesondere bei häufiger Montage und Demontage des Langformteils 100.

Fig, 8 und Fig. 9 zeigen skizzenhaft das Langformteil 100 mit Stützhülse 60 und Quetschhülse 63 in einem Kontaktierungssystem 10 angeordnet, wobei Fig. 8 das unbetätigte Kontaktierungssystem 10 und Fig. 9 das betätigte Kontaktierungssystem 10 zeigt. Durch die Quetschhülse 63 wird ein größerer Toleranzbereich beschaffen, auf dem das Klemmelement 50 zur Ableitung von elektrischen Strömen auf dem Langformteil 100 positioniert wird. Weiterhin bietet die Oberfläche 65 der Quetschhülse 63 vorteilhaft einen besseren elektrischen Kontakt zum Klemmelement 50 als beispielsweise ein Schirm 102 aus einem Drahtgeflecht. Vorteilhafterweise ist eine Oberfläche 65 der Quetschhülse 63 und/oder eine in Fig. 1 bezeichnete Innenmantelfläche 55 des Klemmelements 50 derart ausgestaltet, dass eine elektrische Kontaktierung verbessert wird, beispielsweise aufgeraut oder geglättet.

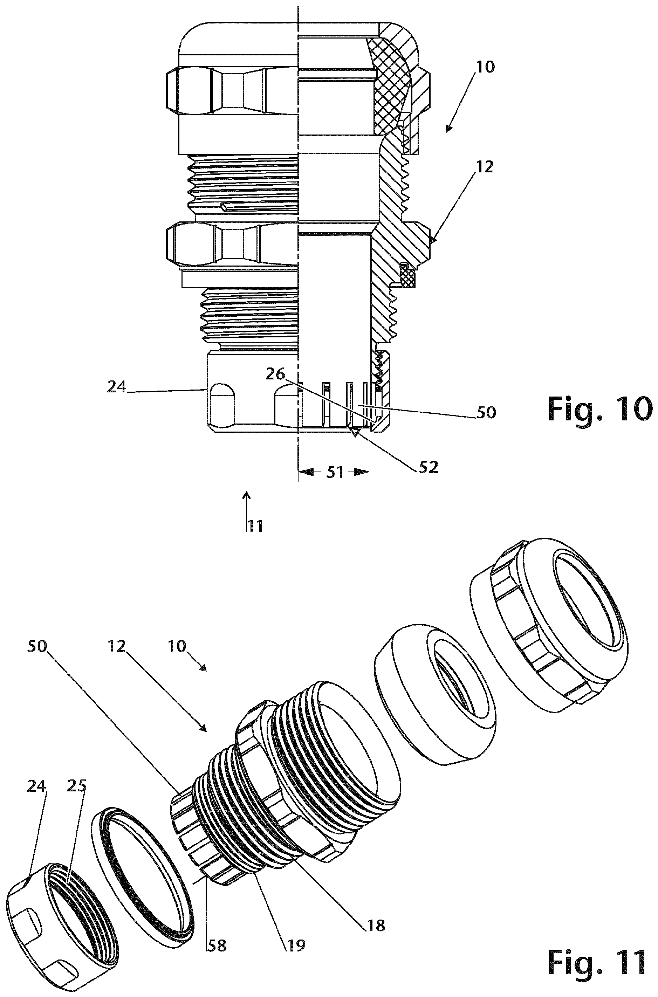

Fig. 10 zeigt eine weitere Ausgestaltung des Kontaktierungssystems 10, bei dem die Verschraubungshülse 12 und das Klemmelement 50 einteilig beziehungsweise einstückig ausgestaltet sind. Das Klemmelement 50 weist auf der ersten Seite 11 eine Anzahl von Schlitzungen 52 auf, von denen beispielhaft nur eine bezeichnet ist. Das Betätigungselement 24 weist eine Gegendruckfläche 26 auf seiner Innenseite auf.

Fig. 11 zeigt eine Explosionsdarstellung des Kontaktierungssystems 10 aus Fig. 10. Das Betätigungsgewinde 19 ist zwischen dem Anschlussgewinde 18 und dem Klemmelement 50 angeordnet. Das Betätigungselement 24 weist ein Gewinde 25 auf, das als Innengewinde ausgestaltet ist.

Mit dem vorgeschlagenen Kontaktierungssystem 10 wird vorteilhaft eine Möglichkeit geschaffen, große Toleranzen bei der Montage von Langformteilen 100 zu gewährleisten, in dem beispielsweise die Positionierung des Klemmelements 50 großzügig auf dem Schirm 102 des Langformteils 100 gewählt werden kann und der abisolierte Teil des Schirmes nicht exakt an die Gegebenheiten des Kontaktierungssystems angepasst werden muss. Weiterhin vorteilhaft ist, dass die Betätigung des Kontaktierungssystems, das heißt Kontaktierung mit dem Schirm, unabhängig von weiteren Montageschritten vorgenommen werden kann und somit die Montage des Langformteils weiter vereinfacht wird.

## Patentansprüche

1. Kontaktierungssystem (10) umfassend eine als Doppelnippel ausgestaltete Verschraubungshülse (12), wobei die Verschraubungshülse (12) auf einer ersten Seite (11) einen Anschlussabschnitt (16) aufweist, ein Betätigungselement (24) und ein Klemmelement (50), wobei das Klemmelement (50) zumindest eine Innenmantelfläche (55) und zumindest eine erste Stirnfläche (58) umfasst, wobei der Anschlussabschnitt (16) ein Anschlussgewinde (18) und ein Betätigungsgewinde (19) aufweist, wobei die Verschraubungshülse (12) auf der ersten Seite (11) der Verschraubungshülse (12) das Anschlussgewinde (18) zur Verbindung mit einer Anschlussgeometrie umfasst, wobei das Anschlussgewinde (18) radial außenseitig und das Betätigungsgewinde (19) zur Aufnahme des Betätigungselements (24) radial innenseitig an der Verschraubungshülse (12) angeordnet ist, und wobei das Betätigungselement (24) eine Gegendruckstirnfläche (26) umfasst, wobei ein Innenradius (51) des Klemmelements (50) zumindest abschnittsweise mittels einer radialen Kraft verringerbar ist, wobei das Betätigungselement (24) mit dem Betätigungsgewinde (19) auf der ersten Seite (11) der Verschraubungshülse (12) verschraubbar ist, und wobei mittels Verschrauben des Betätigungselements (24) mit der Verschraubungshülse (12) die radiale Kraft auf zumindest die erste Stirnfläche (58) des Klemmelementes (50) aufbringbar ist, indem zumindest die Gegendruckstirnfläche (26) des Betätigungselements (24) mit der ersten Stirnfläche (58) des Klemmelementes (50) kontaktierbar ist.

2. Kontaktierungssystem (10) nach Anspruch 1, **dadurch gekennzeichnet, dass** ein zumindest teilweise abisoliertes Langformteil (100) in das Kontaktierungssystem (10) derart einbringbar ist, dass bei einer Verschraubung des Betätigungselements (24) mit der Verschraubungshülse (12) das Klemmelement (50) derart verpresst ist, dass mittels zumindest eines Teils der Innenmantelfläche (55) des Klemmelements (50) ein elektrischer Kontakt mit einem Schirm (102) oder mit einem mit dem Schirm (102) verbundenen Element herstellbar ist.

3. Kontaktierungssystem (10) nach einem oder mehreren der vorhergehenden Ansprüche, **dadurch gekennzeichnet, dass** eine zweite Stirnfläche (56) und/oder die erste Stirnfläche (58) des Klemmelements (50) eine Fase umfasst.

4. Kontaktierungssystem (10) nach einem oder mehreren der vorhergehenden Ansprüche, **dadurch gekennzeichnet, dass** das Klemmelement (50) eine in Richtung einer Längsachse (70) des Kontaktierungssystems (10) vollständig durchgängige Schlitzung (52), mehrere am Umfang verteilte Schlitzungen oder keine Schlitzung umfasst.

5. Kontaktierungssystem (10) nach einem oder mehreren der vorhergehenden Ansprüche, **dadurch gekennzeichnet, dass** die Verschraubungshülse (12) einteilig oder mehrteilig mit dem Klemmelement (50) ausgestaltet ist.

6. Kontaktierungssystem (10) nach einem oder mehreren der Ansprüche 3 bis 5, **dadurch gekennzeichnet, dass** die Verschraubungshülse (12) eine Druckstirnfläche (32) umfasst, wobei das Klemmelement (50) derart in die Verschraubungshülse (12) einbringbar ist, dass eine Druckstirnfläche (32) der Verschraubungshülse (12) die zweite Stirnfläche (56) des Klemmelementes (50) kontaktiert und die Gegendruckstirnfläche (26) des Betätigungselements (24) die erste Stirnfläche (58) des Klemmelementes (50) kontaktiert.

7. Kontaktierungssystem (10) nach einem oder mehreren der vorhergehenden Ansprüche, **dadurch gekennzeichnet, dass** dieses eine Stützhülse (60), die unter einen Schirm eines Langformteils (100) schiebbar ist, und/oder eine Quetschhülse (63), die zwischen Schirm (102) und Klemmelement (50) anordenbar ist, umfasst.

8. Verwendung eines Kontaktierungssystems (10) nach einem oder mehreren der vorhergehenden Ansprüche zum mittelbaren oder unmittelbaren Kontaktieren eines freiliegenden Schirms (102) eines Langformteils (100).

9. Verwendung nach Anspruch 8, **dadurch gekennzeichnet, dass** das zumindest teilweise abisolierte Langformteil (100) in das Kontaktierungssystem (10) derart einbringbar ist, dass eine Stützhülse (60) zwischen zumindest einer Ader des Langformteils (100) und dem Schirm (102) des Langformteils (100) anordenbar ist.

10. Verwendung nach einem oder mehreren der Ansprüche 8 bis 9, **dadurch gekennzeichnet, dass** das Klemmelement (50) den Schirm (102) gegen die Stützhülse (60) presst.

11. Verwendung nach einem oder mehreren der Ansprüche 8 bis 10, **dadurch gekennzeichnet, dass** mittels eines auf einer zweiten Seite der Verschraubungshülse (12) aufschraubbaren Druckschraube (30) und eines Dichtelements (36) das Langformteil (100) kraftschlüssig gehalten und/oder abgedichtet wird.

12. Verschraubungssystem zur Verschraubung eines Langformteils (100) umfassend ein Kontaktierungssystem nach einem oder mehreren der Ansprüche 1 bis 7.

13. Verfahren zur Ableitung von elektrischen Strömen eines Schirms eines Langformteils umfassend die Schritte
a. Bereitstellen eines Kontaktierungssystems (10) nach einem oder mehreren der Ansprüche 1 bis 7,
b. teilweises Freilegen eines Schirms (102) eines Langformteils (100) und Einbringen dieses in das Kontaktierungssystem (10),
c. Verschrauben eines Betätigungselements (24) des Kontaktierungssystems (10) mit einer Verschraubungshülse (12), wobei das Betätigungselements (24) auf ein Klemmelement (50) wirkt derart, dass das Klemmelement (50) eine radiale Kraft auf den Schirm (102) des Langformteils (100) oder auf ein mit dem Schirm (102) verbundenes Element ausübt, wobei mittels Verschrauben des Betätigungselements (24) das Klemmelement (50) mit dem Schirm (102) oder mit einem mit dem Schirm (102) verbundenen Element elektrisch kontaktiert wird.

14. Verfahren nach Anspruch 13, **dadurch gekennzeichnet, dass** eine Stützhülse (60) unter den Schirm (102) platziert wird, bevor das Langformteil (100) in das Kontaktierungssystem (10) eingebracht wird.

15. Verfahren nach einem oder mehreren der Ansprüche 13 bis 14, **dadurch gekennzeichnet, dass** eine Quetschhülse (63) als das mit dem Schirm (102) verbundene Element auf dem Schirm angeordnet wird, bevor das Langformteil (100) in das Kontaktierungssystem (10) eingebracht wird.

16. Verfahren nach einem oder mehreren der Ansprüche 13 bis 15, **dadurch gekennzeichnet, dass** das Einschrauben des Betätigungselements (24) zur Verklemmung des Klemmelements (50) mit dem Schirm (102) oder mit einem mit dem Schirm (102) verbundenen Element vor oder nach einem Anschluss des Langformteils an einen Verbraucher erfolgt.

## Claims

1. Contact-making system (10) comprising a screw-connection sleeve (12) that is developed as a double nipple, wherein the screw-connection sleeve (12) has a connecting section (16) on a first side (11), an actuation element (24) and a clamping element (50), wherein the clamping element (50) comprises at least one inner lateral surface (55) and at least a first abutting face (58), wherein the connecting section (16) has a connecting thread (18) and an actuation thread (19), wherein the screw-connection sleeve (12) comprises the connecting thread (18) on the first side (11) of the screw-connection sleeve (12) for the connection to a terminal geometry, wherein the connecting thread (18) is arranged on the radially outer side of the screw-connection sleeve (12) and the actuation thread (19) is arranged on the radially inner side of the screw-connection sleeve (12) for the purpose of receiving the actuation element (24), and wherein the actuation element (24) comprises a counter-pressure abutting face (26), wherein an inner radius (51) of the clamping element (50) can be reduced at least in sections by means of a radial force, wherein the actuation element (24) can be screwed to the actuation thread (19) on the first side (11) of the screw-connection sleeve (12), and wherein the radial force can be applied to at least the first abutting face (58) of the clamping element (50) by means of screwing together of the actuation element (24) with the screw-connection sleeve (12), in that at least the counter-pressure abuting face (26) of the actuation element (24) can be brought into contact with the first abutting face (58) of the clamping element (50).

2. Contact-making system (10) according to claim 1, **characterized in that** an at least partially stripped long-shaped part (100) can be introduced into the contact-making system (10) in such a way that, when the actuation element (24) is screwed to the screw-connection sleeve (12), the clamping element (50) is pressed in such a way that, by means of at least a part of the inner lateral surface (55) of the clamping element (50), an electrical contact can be made with a shield (102) or with an element that is connected to the shield (102).

3. Contact-making system (10) according to one or more of the preceding claims, **characterized in that** a second abutting face (56) and/or the first abutting face (58) of the clamping element (50) comprises a chamfer.

4. Contact-making system (10) according to one or more of the preceding claims, **characterized in that** the clamping element (50) comprises a slot (52) that is completely continuous in the direction of a longitudinal axis (70) of the contact-making system (10), a plurality of slots that are distributed around the circumference, or no slot.

5. Contact-making system (10) according to one or more of the preceding claims, **characterized in that** the screw-connection sleeve (12) is developed in a single piece or in several parts with the clamping element (50).

6. Contact-making system (10) according to one or more of the claims 3 to 5, **characterized in that** the screw-connection sleeve (12) comprises a pressure abutting face (32), wherein the clamping element (50) can be introduced into the screw-connection sleeve (12) in such a way that a pressure abutting face (32) of the screw-connection (12) makes contact with the second abutting face (56) of the clamping element (50) and the counter-pressure abuting face (26) of the actuation element (24) makes contact with the first abutting face (58) of the clamping element (50).

7. Contact-making system (10) according to one or more of the preceding claims, **characterized in that** it comprises a supporting sleeve (60) that can be pushed under a shield of a long-shaped part (100) and/or **in that** ist comprises a crimping sleeve (63) that can be arranged between the shield (102) and the clamping element (50).

8. Use of a contact-making system (10) according to one or more of the preceding claims, for the direct or indirect contact-making of an exposed shield (102) of a long-shaped part (100).

9. Use according to claim 8, **characterized in that** the at least partially stripped long-shaped part (100) can be introduced into the contact-making system (10) in such a way that a supporting sleeve (60) can be arranged between at least one core of the long-shaped part (100) and the shield (102) of the long-shaped part (100).

10. Use according to one or more of the claims 8 to 9, **characterized in that** the clamping element (50) presses the shield (102) against the supporting sleeve (60).

11. Use according to one or more of the claims 8 to 10, **characterized in that** the long-shaped part (100) is being held and/or sealed in a force-fitted manner by means of a pressure screw (30) that can be screwed onto a second side of the screw-connection sleeve (12) and by means of a sealing element (36).

12. Screw-connection system for the screw-connection of a long-shaped part (100), comprising a contact-making system (10) according to one or more of the claims 1 to 7.

13. Method for the for the discharge of electrical currents from a shield of a long-shaped part, comprising the steps of
a. providing a contact-making system (10) according to one or more of the claims 1 to 7,
b. partially exposing a shield (102) of a long-shaped part (100) and introducing it into the contact-making system (10),
c. screwing together of an actuation element (24) of the contacting system (10) with a screw-connection sleeve (12), wherein the actuation element (24) acts on a clamping element (50) in such a way that the clamping element (50) exerts a radial force on the shield (102) of the long-shaped part (100) or on an element that is connected to the shield (102), wherein the clamping element (50) is being electrically contacted with the screen (102) or with an element that is connected to the screen (102), by means of the screwing together of the actuation element (24).

14. Method according to claim 13, **characterized in that** a supporting sleeve (60) is being placed under the shield (102) before the long-shaped part (100) is being introduced into the contact-making system (10).

15. Method according to one or more of the claims 13 to 14, **characterized in that** a crimping sleeve (63) is being arranged as the element that is connected to the shield (102), on the shield before the long-shaped part (100) is being introduced into the contact-making system (10).

16. Method according to one or more of the claims 13 to 14, **characterized in that** the screwing in of the actuation element (24) for the purpose of the clamping of the clamping element (50) with the shield (102) or with an element that is connected to the shield (102), takes place before or after a connecting of the long-shaped part to a consumer.

## Revendications

1. Système de mise en contact (10) comprenant une douille de vissage (12) conçue comme un double mamelon, la douille de vissage (12) présentant sur un premier côté (11) une section de raccordement (16), un élément d'actionnement (24) et un élément de serrage (50), l'élément de serrage (50) comprenant au moins une surface d'enveloppe intérieure (55) et au moins une première surface frontale (58), la section de raccordement (16) présentant un filetage de raccordement (18) et un filetage de d'actionnement (19), la douille de vissage (12) comprenant sur le premier côté (11) de la douille de vissage (12) le filetage de raccordement (18) pour la liaison avec une géométrie de raccordement, le filetage de raccordement (18) étant disposé radialement à l'extérieur et le filetage d'actionnement (19) étant disposé radialement à l'intérieur de la douille de vissage (12) pour recevoir l'élément d'actionnement (24), et l'élément d'actionnement (24) comprenant une surface frontale de contre-pression (26), un rayon intérieur (51) de l'élément de serrage (50) pouvant être réduit au moins par sections au moyen d'une force radiale, l'élément d'actionnement (24) pouvant être vissé avec le filetage d'actionnement (19) sur le premier côté (11) de la douille de vissage (12), et la force radiale pouvant être appliquée sur au moins la première surface frontale (58) de l'élément de serrage (50) au moyen du vissage de l'élément d'actionnement (24) avec la douille de vissage (12), dans lequel au moins la surface frontale de contre-pression (26) de l'élément d'actionnement (24) est reliable à la première surface frontale (58) de l'élément de serrage (5).

2. Système de mise en contact (10) selon la revendication 1, **caractérisé en ce qu'**une pièce moulée allongée (100) au moins partiellement dénudée peut être introduite dans le système de mise en contact (10) de telle manière que, lors d'un vissage de l'élément d'actionnement (24) avec la douille de vissage (12), l'élément de serrage (50) est comprimé de telle manière qu'un contact électrique peut être établi avec un blindage (102) ou avec un élément relié au blindage (102) au moyen d'au moins une partie de la surface d'enveloppe intérieure (55) de l'élément de serrage (50).

3. Système de mise en contact (10) selon une ou plusieurs des revendications précédentes, **caractérisé en ce qu'**une deuxième surface frontale (56) et/ou la première surface frontale (58) de l'élément de serrage (50) comprend un biseau.

4. Système de mise en contact (10) selon une ou plusieurs des revendications précédentes, **caractérisé en ce que** l'élément de serrage (50) comprend une fente (52) qui le traverse entièrement dans la direction d'un axe longitudinal (70) du système de mise en contact (10), plusieurs fentes réparties sur la périphérie ou aucune fente.

5. Système de mise en contact (10) selon une ou plusieurs des revendications précédentes, **caractérisé en ce que** la douille de vissage (12) est conçue en une ou plusieurs parties avec l'élément de serrage (50).

6. Système de mise en contact (10) selon une ou plusieurs des revendications 3 à 5, **caractérisé en ce que** la douille vissage (12) comprend une surface frontale de pression (32), l'élément de serrage (50) pouvant être inséré dans la douille de vissage (12) de telle manière, qu'une surface frontale de pression (32) de la douille de vissage (12) est en contact avec la deuxième surface frontale (56) de l'élément de serrage (50) et que la surface frontale de contre-pression (26) de l'élément d'actionnement (24) est en contact avec la première surface frontale (58) de l'élément de serrage (50).

7. Système de mise en contact (10) selon une ou plusieurs des revendications précédentes, **caractérisé en ce qu'**il comprend une douille de support (60) qui peut être glissée sous un blindage d'une pièce moulée allongée (100) et/ou une douille de pincement (63) qui peut être disposée entre le blindage (102) et l'élément de serrage (50).

8. Utilisation d'un système de mise en contact (10) selon une ou plusieurs des revendications précédentes pour la mise en contact directe ou indirecte d'un blindage (102) dénudé d'une pièce moulée allongée (100).

9. Utilisation selon la revendication 8, **caractérisée en ce que** la pièce moulée allongée (100) au moins partiellement dénudée peut être introduite dans le système de mise en contact (10) de telle manière qu'une douille de support (60) peut être disposée entre au moins un fil de la pièce moulée allongée (100) et le blindage (102) de la pièce de moulée allongée (100).

10. Utilisation selon une ou plusieurs des revendications 8 à 9, **caractérisée en ce que** l'élément de serrage (50) presse le blindage (102) contre la douille de support (60).

11. Utilisation selon une ou plusieurs des revendications 8 à 10, **caractérisée en ce que** la pièce moulée allongée (100) est maintenue par adhérence et/ou rendue étanche au moyen d'une vis de pression (30) pouvant être vissée sur un deuxième côté de la douille de vissage (12) et d'un élément d'étanchéité (36).

12. Système de vissage pour le vissage d'une pièce moulée allongée (100) comprenant un système de mise en contact selon une ou plusieurs des revendications 1 à 7.

13. Procédé de dérivation de courants électriques d'un blindage d'une pièce moulée allongée comprenant les étapes suivantes
a. Fournir un système de mise en contact (10) selon une ou plusieurs des revendications 1 à 7,
b. Dénuder partiellement un blindage (102) d'une pièce moulée allongée (100) et introduire celui-ci dans le système de mise en contact (10),
c. Visser un élément d'actionnement (24) du système de mise en contact (10) avec une douille de vissage (12), l'élément d'actionnement (24) agissant sur un élément de serrage (50) de telle manière, que l'élément de serrage (50) exerce une force radiale sur le blindage (102) de la pièce moulée allongée (100) ou sur un élément relié au blindage (102), l'élément de serrage (50) étant mis en contact électrique avec le blindage (102) ou avec un élément relié au blindage (102) au moyen du vissage de l'élément d'actionnement (24).

14. Procédé selon la revendication 13, **caractérisé en ce qu'**une douille de support (60) est placée sous le blindage (102) avant que la pièce moulée allongée (100) ne soit introduite dans le système de mise en contact (10).

15. Procédé selon l'une ou plusieurs des revendications 13 à 14, **caractérisé en ce qu'**une douille de pincement (63) est placée sur le blindage (102) en tant qu'élément connecté au blindage avant que la pièce moulée allongée (100) ne soit insérée dans le système de mise en contact (10).

16. Procédé selon une ou plusieurs des revendications 13 à 15, **caractérisé en ce que** le vissage de l'élément d'actionnement (24) pour le serrage de l'élément de serrage (50) avec le blindage (102) ou avec un élément relié au blindage (102) est effectué avant ou après un raccordement de la pièce moulée allongée à un consommateur.
